# EUROPÄISCHE PATENTANMELDUNG

(11) **EP 4 488 518 A1**
(43) Veröffentlichungstag der Anmeldung: **08.01.2025**
(21) Anmeldenummer: 23183631.3
(22) Anmeldetag: 05.07.2023
(51) Int. Cl.: F03D 80/70

(54) **GONDEL FÜR EINE WINDKRAFTANLAGE**

(71) Anmelder: Miba Gleitlager Austria GmbH, 4663 Laakirchen (AT)
(72) Erfinder: ZEH, Christopher, 37434 Obernfeld (DE); HÖLZL, Johannes, 4880 Berg im Attergau (AT); LAUBICHLER, Patrick, 4810 Gmunden (AT); LOITESBERGER, Alexander, 4694 Ohlsdorf (AT); LEEB, Markus, 4664 Oberweis (AT)
(74) Vertreter: Burger, Hannes

(57) **Zusammenfassung**

Die Erfindung betrifft eine Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), wobei die Rotorlagerung (8) eine erste Gleitlagerung (9) und axial davon beabstandet eine zweite Gleitlagerung (10) aufweist,

wobei die erste Gleitlagerung (9) eine erste Gleitfläche (22) aufweist und eine mit der ersten Gleitfläche (22) zusammenwirkende erste Gegenfläche (23) aufweist,
wobei die zweite Gleitlagerung (10) eine zweite Gleitfläche (31) aufweist und eine mit der zweiten Gleitfläche (31) zusammenwirkende zweite Gegenfläche (32) aufweist.

Eine erste Mittelachse (24) der ersten Gleitfläche (22) ist zu einer zweiten Mittelachse (33) der zweiten Gleitfläche (31) um einen radialen Achsgesamtabstand (35) versetzt angeordnet.

## Beschreibung

Die Erfindung betrifft eine Gondel für eine Windkraftanlage, sowie mit der Gondel ausgestattete Windkraftanlage.

Die EP3988807A1 offenbart eine Windkraftanlage mit einer Gleitlagerung.

Die aus der EP3988807A1 bekannte Gleitlagerung weist den Nachteil auf, dass ein mit der Rotorwelle gekoppeltes Getriebe einer übermäßigen Belastung unterliegen kann.

Aufgabe der vorliegenden Erfindung war es, die Nachteile des Standes der Technik zu überwinden und eine verbesserte Windkraftanlage, sowie eine mit der Gondel ausgestattete Windkraftanlage zur Verfügung zu stellen.

Diese Aufgabe wird durch eine Vorrichtung und ein Verfahren gemäß den Ansprüchen gelöst.

Erfindungsgemäß ist eine Gondel für eine Windkraftanlage ausgebildet. Die Gondel umfasst:
- ein Gondelgehäuse;
- eine Rotornabe;
- eine Rotorlagerung zur Lagerung der Rotornabe am Gondelgehäuse, wobei die Rotorlagerung eine erste Gleitlagerung und axial davon beabstandet eine zweite Gleitlagerung aufweist, wobei die erste Gleitlagerung eine erste Gleitfläche aufweist und eine mit der ersten Gleitfläche zusammenwirkende erste Gegenfläche aufweist,
wobei die zweite Gleitlagerung eine zweite Gleitfläche aufweist und eine mit der zweiten Gleitfläche zusammenwirkende zweite Gegenfläche aufweist.

Eine erste Mittelachse der ersten Gleitfläche ist zu einer zweiten Mittelachse der zweiten Gleitfläche um einen radialen Achsgesamtabstand versetzt angeordnet.

Die erfindungsgemäße Gondel bringt den Vorteil mit sich, dass durch die radial versetzte Anordnung der ersten Mittelachse und der zweiten Mittelachse eine Verkippung der Rotornabe aufgrund des Lagerspiels der ersten Gleitlagerung bzw. der zweiten Gleitlagerung ausgeglichen werden kann. Somit kann durch diese Maßnahme erreicht werden, dass die Rotornabe auch bei Belastung durch den Rotor in einer Sollposition zum Gondelgehäuse zum Liegen kommt. Dadurch kann ein übermäßiger Verschleiß von mit der Rotornabe gekoppelten Bauteilen, wie etwa einem Generator oder einem Getriebe, welcher aufgrund der Lageabweichung auftreten würde, hintangehalten werden. Somit kann die Lebensdauer der Windkraftanlage erhöht werden.

Weiters kann vorgesehen sein, dass die erste Gleitfläche mit einem feststehenden Bauteil gekoppelt ist und die erste Gegenfläche mit einem sich relativ zum feststehenden Bauteil drehbaren Bauteil gekoppelt ist.

Darüber hinaus kann vorgesehen sein, dass die zweite Gleitfläche mit dem feststehenden Bauteil gekoppelt ist und die zweite Gegenfläche mit dem drehbaren Bauteil gekoppelt ist. In einem Ausführungsbeispiel kann das drehbare Bauteil die Rotorwelle sein. Das feststehende Bauteil kann das Gondelgehäuse sein.

Weiters kann es zweckmäßig sein, wenn die erste Mittelachse der ersten Gleitfläche zu einer Rotationsachse der Rotornabe um einen ersten radialen Achsabstand versetzt angeordnet ist und/oder dass die zweite Mittelachse zu der Rotationsachse der Rotornabe um einen zweiten radialen Achsabstand versetzt angeordnet ist, wobei sich der radiale Achsgesamtabstand aus dem ersten radialen Achsabstand und dem zweiten radialen Achsabstand zusammensetzt. Dies bringt den Vorteil mit sich, dass durch diese Maßnahme das Lagerspiel der ersten Gleitlagerung und das Lagerspiel der zweiten Gleitlagerung ausgeglichen werden können. Somit kann die tatsächliche Rotationsachse der Rotornabe exakt koaxial mit einer Sollrotationsachse der Rotornabe liegen. Mit anderen Worten ausgedrückt können somit nicht nur Winkelfehllagen ausgeglichen werden, sondern kann auch eine exakte Positionierung der Rotorachse bzw. der Rotornabe erreicht werden.

Ferner kann vorgesehen sein, dass der erste radiale Achsabstand zwischen 90% und 110%, insbesondere zwischen 95% und 105%, bevorzugt zwischen 98% und 102% eines halben ersten Gleitlagerspiels beträgt, wobei das erste Gleitlagerspiel eine Durchmesserdifferenz der ersten Gleitfläche und der ersten Gegenfläche ist. Dies bringt den Vorteil mit sich, dass durch diese Maßnahme ein guter Ausgleich des Gleitlagerspiels erreicht werden kann, sodass die Rotationsachse der Rotornabe auf einer idealen Sollrotationsachse liegt bzw. sich bestmöglich mit dieser deckt.

Das Gleitlagerspiel berechnet sich aus einer Differenz zwischen einem Nenndurchmesser der ersten Gleitfläche und einem Nenndurchmesser der ersten Gegenfläche.

Darüber hinaus kann vorgesehen sein, dass der erste radiale Achsabstand und der zweite radiale Achsabstand gleich groß sind, wobei sich der erste radiale Achsabstand in eine erste Seite der Rotationsachse erstreckt und sich der zweite radiale Achsabstand in eine zweite Seite der Rotationsachse erstreckt. Durch diese Maßnahme kann berücksichtigt werden, dass bedingt durch die Gewichtskraft des Rotors bzw. das daraus entstehende Kippmoment die Kraftrichtung an der ersten Gleitlagerung und an der zweiten Gleitlagerung unterschiedlich sein kann. Insbesondere kann vorgesehen sein, dass an der ersten Gleitlagerung die Rotorwelle eine vertikal nach unten gerichtete Kraft in das Gondelgehäuse einbringt und dass an der zweiten Gleitlagerung die Rotorwelle eine vertikal nach oben gerichtete Kraft in das Gondelgehäuse einbringt.

Vorteilhaft ist auch eine Ausprägung, gemäß welcher vorgesehen sein kann, dass die Rotornabe mit einer Rotorwelle gekoppelt ist, wobei die Rotorlagerung zwischen der Rotorwelle und dem Gondelgehäuse angeordnet ist, wobei die erste Gleitlagerung näher zu einer Rotorseite angeordnet ist als die zweite Gleitlagerung und wobei die erste Gleitlagerung folgende Bauteile umfasst:
- ein erstes inneres Ringelement;
- ein erstes äußeres Ringelement;
- zumindest ein erstes Gleitlagerelement, welches zwischen dem ersten inneren Ringelement und dem ersten äußeren Ringelement angeordnet ist, wobei das erste Gleitlagerelement mehrere erste Gleitlagerpads aufweist. Besonders bei einem derartigen Aufbau bringt der Ausgleich des Lagerspiels große Vorteile mit sich, da hierbei eine etwaig auftretende Verkippung der Rotorwelle ausgeglichen werden kann. Insbesondere kann hierbei vorgesehen sein, dass das innere Ringelement mit der Rotorwelle gekoppelt ist. Weiters kann vorgesehen sein, dass das äußere Ringelement feststehend bzw. starr mit dem Gondelgehäuse gekoppelt ist.

Gemäß einer Weiterbildung ist es möglich, dass das erste äußere Ringelement der ersten Gleitlagerung die erste Gleitfläche und eine erste Außenmantelfläche aufweist, wobei die erste Gleitfläche exzentrisch zur ersten Außenmantelfläche angeordnet ist. Dies bringt den Vorteil mit sich, dass ein exzentrisches äußeres Ringelement einfach hergestellt werden kann. Insbesondere kann vorgesehen sein, dass die Exzentrizität zwischen 90% und 110%, insbesondere zwischen 95% und 105%, bevorzugt zwischen 98% und 102% des halben Gleitlagerspiels beträgt. Durch Verdrehung des äußeren Ringelementes kann der Achsabstand eingestellt werden. Insbesondere ist es hierbei denkbar, dass die Verdrehung des äußeren Ringelementes mit einer radialen Verschiebung des äußeren Ringelementes kombiniert wird, um die Position der ersten Mittelachse einstellen zu können.

Ferner kann es zweckmäßig sein, wenn das erste äußere Ringelement mittels einer ersten Lagerhalterung am Gondelgehäuse befestigt ist, wobei zwischen der ersten Lagerhalterung und dem Gondelgehäuse ein Distanzhalter angeordnet ist. Dies bringt den Vorteil mit sich, dass mittels des Distanzhalters die Position der ersten Mittelachse eingestellt werden kann. Somit ist es möglich den Achsgesamtabstand einstellen zu können.

Darüber hinaus kann vorgesehen sein, dass eine Distanzhalterhöhe des Distanzhalters zwischen 90% und 110%, insbesondere zwischen 95% und 105%, bevorzugt zwischen 98% und 102% des halben Gleitlagerspiels beträgt. Dies bringt den Vorteil mit sich, dass durch diese Maßnahme ein exakter Ausgleich des Lagerspiels erreicht werden kann.

Weiters kann vorgesehen sein, dass die erste Gleitfläche als zylindrische Oberfläche ausgebildet ist und dass die zweite Gleitfläche als gewölbte Oberfläche ausgebildet ist. Dies bringt den Vorteil mit sich, dass durch diese Maßnahme ein besonders einfacher Ausgleich des Lagerspiels erreicht werden kann. Darüber hinaus kann durch diese Maßnahme erreicht werden, dass die zweite Gleitlagerung zur Aufnahme von Axialkräften dienen kann.

Gemäß einer besonderen Ausprägung ist es möglich, dass ein erstes Verstellelement ausgebildet ist, wobei mittels des ersten Verstellelementes der erste radiale Achsabstand einstellbar ist. Dies bringt den Vorteil mit sich, dass durch diese Maßnahme ein, während dem Betrieb auftretender, Verschleiß der Gleitlagerungen berücksichtigt bzw. ausgeglichen werden kann. Das Verstellelement kann beispielsweise in Form einer Unterlage ausgebildet sein, welche zwei Keilförmige Elemente aufweist. Durch Verschiebung der keilförmigen Elemente zueinander kann der Abstand eingestellt werden.

Entsprechend der Erfindung ist weiters eine Windkraftanlage mit einer Gondel vorgesehen. Die Gondel ist nach einer der obigen Ausprägungen ausgebildet.

Ein Gondelgehäuse im Sinne dieses Dokumentes kann sämtliche tragende Strukturen der Gondel umfassen. Das Gondelgehäuse kann somit zur Aufnahme der Rotorlagerung dienen. Das Gondelgehäuse kann auch eine Außenhülle umfassen, welche zur Einhausung von innenliegenden Bauteilen dient. Das Gondelgehäuse kann auch einen Lagerbock zur Aufnahme der Gleitlagerung umfassen.

In einem ersten Ausführungsbeispiel kann die Rotornabe an einer Rotorwelle befestigt sein, welche mittels der ersten Gleitlagerung und der zweiten Gleitlagerung am Gondelgehäuse gelagert ist. In einem weiteren Ausführungsbeispiel kann die Rotornabe mittels der ersten Gleitlagerung und der zweiten Gleitlagerung direkt am Gondelgehäuse gelagert sein.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: eine Längsschnittdarstellung eines ersten Ausführungsbeispiels einer ersten und einer zweiten Gleitlagerung;
- Fig. 3: eine Längsschnittdarstellung eines zweiten Ausführungsbeispiels der ersten und der zweiten Gleitlagerung;
- Fig. 4: eine Querschnittdarstellung eines dritten Ausführungsbeispiels der ersten und der zweiten Gleitlagerung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

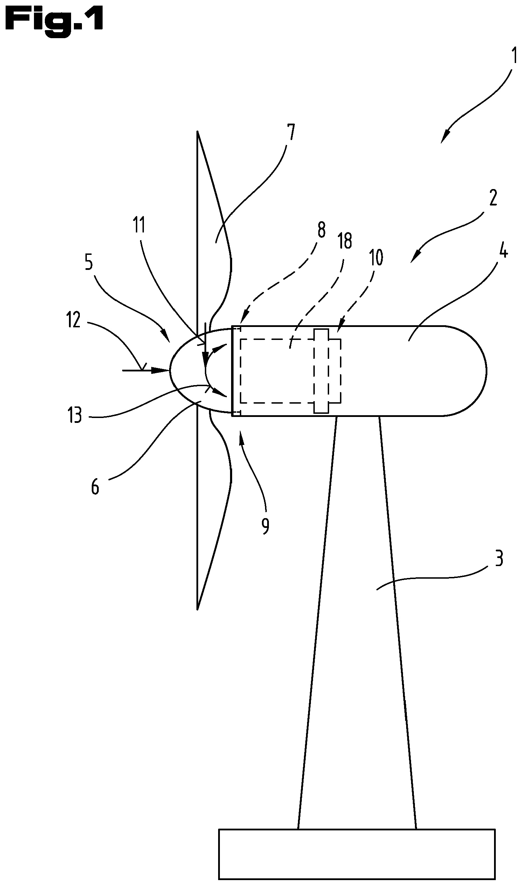

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen. Insbesondere kann vorgesehen sein, dass die Rotorlagerung 8 eine erste Gleitlagerung 9 und eine zweite Gleitlagerung 10 umfasst.

Die Rotorlagerung 8, welche zur Lagerung der Rotornabe 6 am Gondelgehäuse 4 der Gondel 2 dient, ist zur Aufnahme einer Radialkraft 11 und einer Axialkraft 12 ausgebildet. Die Axialkraft 12 ist bedingt durch die Kraft des Windes. Die Radialkraft 11 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 11 ein Kippmoment 13 hervorgerufen. Das Kippmoment 13 kann ebenfalls durch eine ungleichmäßige Belastung der Rotorblätter 7 hervorgerufen werden. Dieses Kippmoment 13 kann mittels einer zweiten Gleitlagerung 10 aufgenommen werden, welche in einem Abstand zur erfindungsgemäßen Gleitlagerung 9 angeordnet ist.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

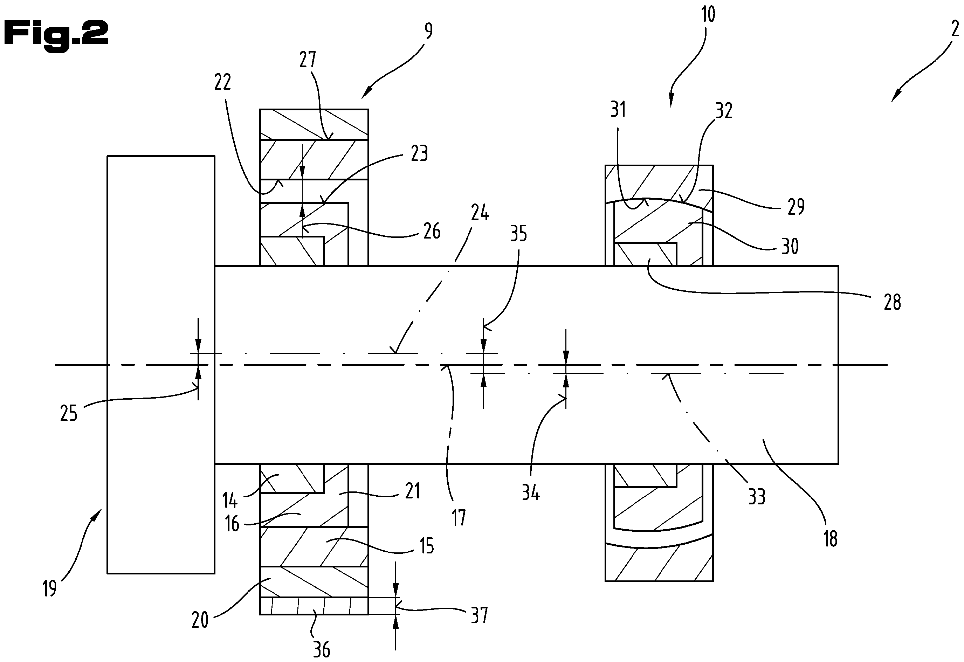

Fig. 2 zeigt ein erstes Ausführungsbeispiel der Gondel 2 mit der ersten Gleitlagerung 9 und der zweiten Gleitlagerung 10. Die erste Gleitlagerung 9 und die zweite Gleitlagerung 10 sind in Fig. 2 in einem Längsschnitt dargestellt.

Wie aus Fig. 2 ersichtlich, kann vorgesehen sein, dass die erste Gleitlagerung 9 ein erstes inneres Ringelement 14 und ein erstes äußeres Ringelement 15 aufweist. Zwischen dem ersten inneren Ringelement 14 und dem ersten äußeren Ringelement 15 ist ein erstes Gleitlagerelement 16 angeordnet, welches zur rotatorischen Gleitlagerung des ersten inneren Ringelementes 14 relativ zum ersten äußeren Ringelement 15 dient. Insbesondere kann vorgesehen sein, dass das erste Gleitlagerelement 16 mehrere erste Gleitlagerpads 21 umfasst. Die einzelnen ersten Gleitlagerpads 21 können um den Umfang verteilt angeordnet sein.

Das erste innere Ringelement 14 und das erste äußere Ringelement 15 sind hierbei um eine Rotationsachse 17 relativ zueinander verdrehbar. Die Rotationsachse 17 liegt im vorliegenden Ausführungsbeispiel deckungsgleich mit einer Mittelachse einer Rotorwelle 18.

Im Ausführungsbeispiel, welches in Fig. 2 dargestellt ist, ist das erste innere Ringelement 14 an der Rotorwelle 18 aufgenommen. In einem weiteren Ausführungsbeispiel ist es auch denkbar, dass das erste innere Ringelement 14 direkt durch die Rotorwelle 18 gebildet ist.

Die Rotorwelle 18 ist in Fig. 2 schematisch dargestellt. Wie aus Fig. 2 ersichtlich, kann vorgesehen sein, dass die Rotorwelle 18 eine Rotorseite 19 aufweist. Die Rotorseite 19 dient zur Aufnahme der Rotornabe 6 bzw. kann die Rotornabe 6 direkt an der Rotorseite 19 der Rotorwelle 18 ausgebildet sein.

Wie aus Fig. 2 weiters ersichtlich, kann vorgesehen sein, dass die erste Gleitlagerung 9 näher an der Rotornabe 6 bzw. an der Rotorseite 19 der Rotorwelle 18 angeordnet ist, als die zweite Gleitlagerung 10.

Weiters kann vorgesehen sein, dass das erste äußere Ringelement 15 mittels einer ersten Lagerhalterung 20 mit dem Gondelgehäuse 4 gekoppelt ist. Bei dem in Fig. 2 dargestellten Ausführungsbeispiel kann vorgesehen sein, dass das äußere Ringelement 15 starr mit dem Gondelgehäuse 4 gekoppelt ist und das innere Ringelement 14 mittels des Gleitlagerelementes 16 relativ zum äußeren Ringelement 15 bezüglich der Rotationsachse 17 verdrehbar ist.

In diesem Ausführungsbeispiel dient die Rotorwelle 18, welche mit der Rotornabe 6 und somit mit dem Rotor 5 gekoppelt sein kann, direkt zur Aufnahme des inneren Ringelementes 14. Somit kann die Rotorwelle 18 mittels der Gleitlagerung 9 im drehbar Gondelgehäuse 4 aufgenommen sein.

Wie aus Fig. 2 weiters ersichtlich, kann vorgesehen sein, dass die erste Gleitlagerung 9 eine erste Gleitfläche 22 aufweist. Im vorliegenden Ausführungsbeispiel kann die erste Gleitfläche 22 beispielsweise im ersten äußeren Ringelement 15 angeordnet sein. Die mit der ersten Gleitfläche 22 zusammenwirkende Gegenfläche 23 kann am ersten Gleitlagerelement 16 angeordnet sein. Insbesondere kann die Gegenfläche 23 an den einzelnen ersten Gleitlagerpads 21 des ersten Gleitlagerelementes 16 angeordnet sein.

Weiters kann vorgesehen sein, dass die erste Gleitfläche 22 eine erste Mittelachse 24 aufweist. Die erste Mittelachse 24 kann eine Symmetrieachse bzw. eine Rotationsachse der ersten Gleitfläche 22 bilden. Insbesondere kann vorgesehen sein, dass die erste Mittelachse 24 in einem ersten radialen Achsabstand 25 zur Rotationsachse 17 angeordnet ist.

Wie aus Fig. 2 weiters ersichtlich, kann vorgesehen sein, dass zwischen der ersten Gleitfläche 22 und der ersten Gegenfläche 23 ein erstes Gleitlagerspiel 26 ausgebildet ist. Das erste Gleitlagerspiel 26 ergibt sich aus einer Differenz des Durchmessers der ersten Gleitfläche 22 und der ersten Gegenfläche 23. Das Vorsehen des ersten Gleitlagerspiels 26 ist beim Einsatz von Gleitlagerungen notwendig, um die Gleitlagerung entsprechend bewegen zu können.

Wie aus Fig. 2 weiters ersichtlich, kann vorgesehen sein, dass das erste äußere Ringelement 15 eine erste Außenmantelfläche 27 aufweist.

Die zweite Gleitlagerung 10 kann einen zur ersten Gleitlagerung 9 ähnlichen Aufbau aufweisen. Insbesondere kann vorgesehen sein, dass die zweite Gleitlagerung 10 ein zweites inneres Ringelement 28 und ein zweites äußeres Ringelement 29 aufweist. Zwischen dem zweiten inneren Ringelement 28 und dem zweiten äußeren Ringelement 29 kann ein zweites Gleitlagerelement 30 angeordnet sein. Insbesondere kann vorgesehen sein, dass das zweite innere Ringelement 28 mit der Rotorwelle 18 gekoppelt ist. Weiters kann vorgesehen sein, dass das zweite äußere Ringelement 29 mit dem Gondelgehäuse 4 gekoppelt ist. Weiters kann vorgesehen sein, dass am zweiten äußeren Ringelement 29 eine zweite Gleitfläche 31 ausgebildet ist. Darüber hinaus kann vorgesehen sein, dass am zweiten Gleitlagerelement 30 eine zweite Gegenfläche 32 ausgebildet ist. Die zweite Gleitfläche 31 und die zweite Gegenfläche 32 können im Betrieb der Windkraftanlage 1 aneinander anliegen bzw. aneinander abgleiten.

Weiters kann vorgesehen sein, dass die zweite Gleitfläche 31 eine zweite Mittelachse 33 aufweist. Die zweite Mittelachse 33 kann eine Symmetrieachse der zweiten Gleitfläche 31 sein. Insbesondere kann vorgesehen sein, dass die zweite Mittelachse 33 in einem zweiten radialen Achsabstand 34 zur Rotationsachse 17 angeordnet ist. Insbesondere kann vorgesehen sein, dass der erste radiale Achsabstand 25 und der zweite radiale Achsabstand 34 in entgegengesetzte Richtungen im Hinblick auf die Rotationsachse 17 liegen. Insbesondere kann vorgesehen sein, dass der erste radiale Achsabstand 25 und der zweite radiale Achsabstand 34 zusammen einen radialen Achsgesamtabstand 35 ergeben.

Wie besonders gut aus Fig. 2 ersichtlich, kann erreicht werden, dass durch einen Versatz der ersten Gleitfläche 22 um den ersten radialen Achsabstand 25 bzw. um einen Versatz der zweiten Gleitfläche 31 um den zweiten radialen Achsabstand 34 jeweils das Lagerspiel ausgeglichen werden kann. Somit kann bei einer Belastung der Rotorwelle 18 durch die Gewichtskraft des Rotors 5 das Gleitlagerspiel der ersten Gleitlagerung 9 bzw. der Gleitlagerung 10 ausgeglichen werden, sodass die Rotationsachse 17 exakt an deren Soll-Position liegt. Somit kann durch diese Maßnahme ein Verkippen der Rotorwelle 18 möglichst hintangehalten werden, wodurch die Lebensdauer der Windkraftanlage 1 erhöht werden kann.

Wie aus Fig. 2 ersichtlich, kann vorgesehen sein, dass unter der ersten Lagerhalterung 20 ein Distanzhalter 36 angeordnet ist, mittels welchem die Position des ersten äußeren Ringelementes 15 und somit die Position der ersten Gleitfläche 22 verschoben werden kann. Insbesondere kann vorgesehen sein kann, dass der Distanzhalter 36 eine Distanzhalterhöhe 37 aufweist. Die Distanzhalterhöhe 37 kann den ersten radialen Achsabstand 25 der ersten Mittelachse 24 bestimmen bzw. vorgeben.

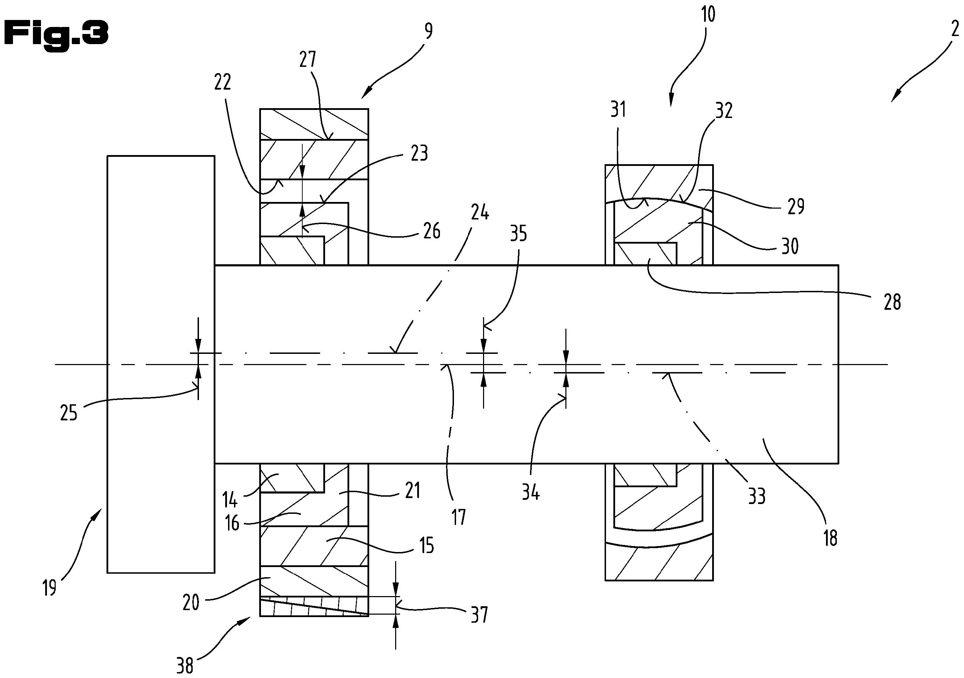

Wie aus Fig. 3 ersichtlich, kann vorgesehen sein, dass anstatt des Distanzhalters 36 mit fixer Distanzhalterhöhe 37 ein erstes Verstellelement 38 eingesetzt wird. Mittels des ersten Verstellelementes 38 kann die Distanzhalterhöhe 37 flexibel angepasst werden. Somit ist es möglich einen Verschleiß der Gleitlagerungen zu berücksichtigen und den ersten radialen Achsabstand 25 entsprechend dem Verschleiß anzupassen.

In den vorliegenden Ausführungsbeispielen nach den Fig. 2 und 3 können das erste innere Ringelement 14 das erste äußere Ringelement 15 und das erste Gleitlagerelement 16 rotationssymmetrisch ausgebildet sein. Das Einstellen des ersten radialen Achsabstandes 25 kann durch das Vorsehen des Distanzhalters 36 bzw. des Verstellelementes 38 erreicht werden.

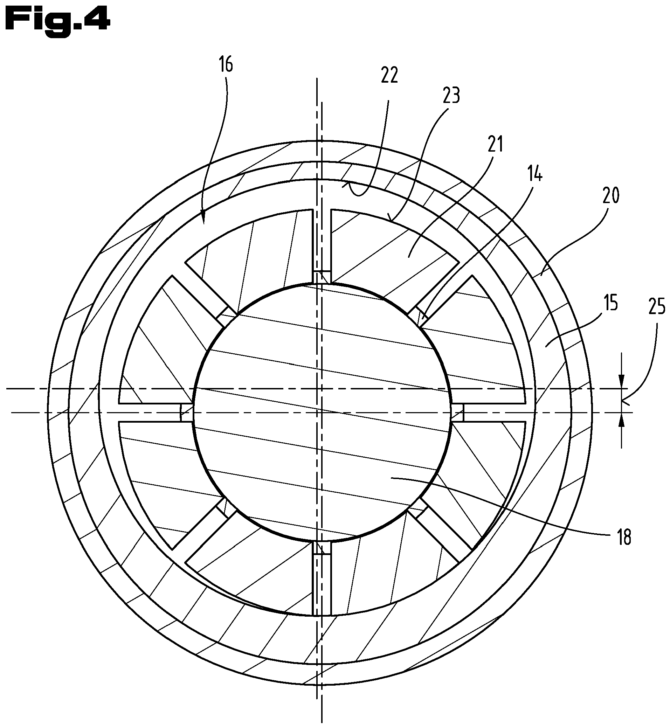

In der Fig. 4 ist eine weitere und gegebenenfalls für sich eigenständige Ausführungsform der ersten Gleitlagerung 9 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

In Fig. 4 ist ein drittes Ausführungsbeispiel der ersten Gleitlagerung 9 in einer Querschnittansicht dargestellt.

Im alternativen Ausführungsbeispiel, welches in Fig. 4 dargestellt ist, kann vorgesehen sein kann, dass die erste Gleitfläche 22 und die erste Außenmantelfläche 27 des ersten äußeren Ringelementes 15 exzentrisch zueinander angeordnet sind. Dadurch kann der erste radiale Achsabstand 25 erreicht werden. Insbesondere kann vorgesehen sein, dass durch eine Verdrehung des ersten äußeren Ringelementes 15 eine Einstellmöglichkeit zum Einstellen des ersten radialen Achsabstandes 25 erreicht wird.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 30 | zweites Gleitlagerelement |
| 2 | Gondel | 31 | zweite Gleitfläche |
| 3 | Turm | 32 | zweite Gegenfläche |
| 4 | Gondelgehäuse | 33 | zweite Mittelachse |
| 5 | Rotor | 34 | zweiter radialer Achsabstand |
| 6 | Rotornabe | 35 | radialer Achsgesamtabstand |
| 7 | Rotorblatt | 36 | Distanzhalter |
| 8 | Rotorlagerung | 37 | Distanzhalterhöhe |
| 9 | erste Gleitlagerung | 38 | erstes Verstellelement |
| 10 | zweite Gleitlagerung | | |
| 11 | Radialkraft | | |
| 12 | Axialkraft | | |
| 13 | Kippmoment | | |
| 14 | erstes inneres Ringelement | | |
| 15 | erstes äußeres Ringelement | | |
| 16 | erstes Gleitlagerelement | | |
| 17 | Rotationsachse | | |
| 18 | Rotorwelle | | |
| 19 | Rotorseite | | |
| 20 | erste Lagerhalterung | | |
| 21 | erstes Gleitlagerpad | | |
| 22 | erste Gleitfläche | | |
| 23 | erste Gegenfläche | | |
| 24 | erste Mittelachse | | |
| 25 | erster radialer Achsabstand | | |
| 26 | erstes Gleitlagerspiel | | |
| 27 | erste Außenmantelfläche | | |
| 28 | zweites inneres Ringelement | | |
| 29 | zweites äußeres Ringelement | | |

## Patentansprüche

1. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), wobei die Rotorlagerung (8) eine erste Gleitlagerung (9) und axial davon beabstandet eine zweite Gleitlagerung (10) aufweist,
wobei die erste Gleitlagerung (9) eine erste Gleitfläche (22), insbesondere an einem feststehenden Bauteil, aufweist und eine mit der ersten Gleitfläche (22) zusammenwirkende erste Gegenfläche (23), insbesondere an einem sich mit der Rotornabe (6) drehenden Bauteil, aufweist,
wobei die zweite Gleitlagerung (10) eine zweite Gleitfläche (31), insbesondere an einem feststehenden Bauteil, aufweist und eine mit der zweiten Gleitfläche (31) zusammenwirkende zweite Gegenfläche (32), insbesondere an einem sich mit der Rotornabe (6) drehenden Bauteil, aufweist,
**dadurch gekennzeichnet, dass**
eine erste Mittelachse (24) der ersten Gleitfläche (22) zu einer zweiten Mittelachse (33) der zweiten Gleitfläche (31) um einen radialen Achsgesamtabstand (35) versetzt angeordnet ist.

2. Gondel (2) nach Anspruch 1, **dadurch gekennzeichnet, dass** die erste Mittelachse (24) der ersten Gleitfläche (22) zu einer Rotationsachse (17) der Rotornabe (6) um einen ersten radialen Achsabstand (25) versetzt angeordnet ist und/oder dass die zweite Mittelachse (33) zu der Rotationsachse (17) der Rotornabe (6) um einen zweiten radialen Achsabstand (34) versetzt angeordnet ist, wobei sich der radiale Achsgesamtabstand (35) aus dem ersten radialen Achsabstand (25) und dem zweiten radialen Achsabstand (34) zusammensetzt.

3. Gondel (2) nach Anspruch 2, **dadurch gekennzeichnet, dass** der erste radiale Achsabstand (25) zwischen 90% und 110%, insbesondere zwischen 95% und 105%, bevorzugt zwischen 98% und 102% eines halben ersten Gleitlagerspiels (26) beträgt, wobei das erste Gleitlagerspiel (26) eine Durchmesserdifferenz der ersten Gleitfläche (22) und der ersten Gegenfläche (23) ist.

4. Gondel (2) nach Anspruch 2 oder 3, **dadurch gekennzeichnet, dass** der erste radiale Achsabstand (25) und der zweite radiale Achsabstand (34) gleich groß sind, wobei sich der erste radiale Achsabstand (25) in eine erste Seite der Rotationsachse (17) erstreckt und sich der zweite radiale Achsabstand (34) in eine zweite Seite der Rotationsachse (17) erstreckt.

5. Gondel (2) nach einem der vorhergehenden Ansprüche, **dadurch gekennzeichnet, dass** die Rotornabe (6) mit einer Rotorwelle (18) gekoppelt ist, wobei die Rotorlagerung (8) zwischen der Rotorwelle (18) und dem Gondelgehäuse (4) angeordnet ist, wobei die erste Gleitlagerung (9) näher zu einer Rotorseite (19) angeordnet ist als die zweite Gleitlagerung (10) und wobei die erste Gleitlagerung (9) folgende Bauteile umfasst:
- ein erstes inneres Ringelement (14);
- ein erstes äußeres Ringelement (15);
- zumindest ein erstes Gleitlagerelement (16), welches zwischen dem ersten inneren Ringelement (14) und dem ersten äußeren Ringelement (15) angeordnet ist, wobei das erste Gleitlagerelement (16) mehrere erste Gleitlagerpads (21) aufweist.

6. Gondel (2) nach Anspruch 5, **dadurch gekennzeichnet, dass** das erste äußere Ringelement (15) der ersten Gleitlagerung (9) die erste Gleitfläche (22) und eine erste Außenmantelfläche (27) aufweist, wobei die erste Gleitfläche (22) exzentrisch zur ersten Außenmantelfläche (27) angeordnet ist.

7. Gondel (2) nach Anspruch 5 oder 6, **dadurch gekennzeichnet, dass** das erste äußere Ringelement (15) mittels einer ersten Lagerhalterung (20) am Gondelgehäuse (4) befestigt ist, wobei zwischen der ersten Lagerhalterung (20) und dem Gondelgehäuse (4) ein Distanzhalter (36) angeordnet ist.

8. Gondel (2) nach Anspruch 4 und 7, **dadurch gekennzeichnet, dass** eine Distanzhalterhöhe (37) des Distanzhalters (36) zwischen 90% und 110%, insbesondere zwischen 95% und 105%, bevorzugt zwischen 98% und 102% des halben Gleitlagerspiels (26) beträgt.

9. Gondel (2) nach einem der vorhergehenden Ansprüche, **dadurch gekennzeichnet, dass** die erste Gleitfläche (22) als zylindrische Oberfläche ausgebildet ist und dass die zweite Gleitfläche (31) als gewölbte Oberfläche ausgebildet ist.

10. Gondel (2) nach einem der vorhergehenden Ansprüche, **dadurch gekennzeichnet, dass** ein erstes Verstellelement (38) ausgebildet ist, wobei mittels des ersten Verstellelementes (38) der erste radiale Achsabstand (25) einstellbar ist.

11. Windkraftanlage (1) mit einer Gondel (2),
**dadurch gekennzeichnet, dass**
die Gondel (2) nach einem der vorhergehenden Ansprüche ausgebildet ist.
